# EUROPÄISCHE PATENTSCHRIFT

(11) **EP 0 471 238 B1**
(45) Veröffentlichungstag und Bekanntmachung des Hinweises auf die Patenterteilung: **23.02.1994**
(21) Anmeldenummer: 91112838.7
(22) Anmeldetag: 31.07.1991
(51) Int. Cl.: C09J 7/02, B29C 61/06

(54) **Schrumpfartikel, wie Schlauch, Kappe, Manschette oder Band aus einem vernetzten Werkstoff**
Shrinkable article such as pipe, cap, cuff or band made of a reticulated material
Article rétractable, tel qu'un tuyau, bonnet, manchette ou ruban constitué d'un matériau réticulé

(30) Priorität: 17.08.1990 DE 4026109
(43) Veröffentlichungstag der Anmeldung: 19.02.1992
(73) Patentinhaber: kabelmetal electro GmbH, 30002 Hannover (DE)
(72) Erfinder: Matzat, Horst, W-3008 Garbsen 4 (DE); Winter, Richard, W-3057 Neustadt 2 (DE)

(56) Entgegenhaltungen:
- GB-A- 2 018 527
- CHEMICAL ABSTRACTS, vol. 93, no. 22, 1. Dezember 1980, Columbus, Ohio, US; abstract no. 205810F, TOKYO PRINTING INK MFG. CO. LTD.: "Hot melt adhesives"; & JP-A-55 090 575
- CHEMICAL ABSTRACTS, vol. 105, no. 2, 14. Juli 1986, Columbus, Ohio, US; abstract no. 7609A, HIBINO: "Hot melt adhesives"; & JP-A-61 002 781
- CHEMICAL ABSTRACTS, vol. 99, no. 12, 19. September 1983, Columbus, Ohio, US; abstract no. 89370K, DAINICHI NIPPON CABLES, LTD., JAPAN: "Solventless olefin polymer adhesive"; & JP-A-58 038 771

## Beschreibung

Die Erfindung betrifft einen Schrumpfartikel, wie Schlauch, Kappe, Manschette oder Band, aus einem vernetzten Werkstoff auf der Basis Olefinpolymerisate, Elastomere oder thermoplastische Kautschuke, dessen dem zu umhüllenden Gegenstand zugekehrte Oberfläche mit einem bei Schrumpftemperatur erweichenden Heißschmelzkleber beschichtet ist.

Wärmeschrumpfende Artikel auf der Basis vernetzter Polyolefine und anderer Kunststoffe werden zum Zwecke der Verklebung und Abdichtung auf Kabeln, Leitungen oder Rohren auf ihrer Innenseite mit einem thermoplastischen Kleber auf Polyamid-, Ethylen-Vinyl-Azetat- oder Polyesterbasis beschichtet.

Diese thermoplastischen Heißschmelzkleber (Hot-melts) zeichnen sich dadurch aus, daß sie bei den bei der Anwendung auftretenden Schrumpftemperaturen erweichen, die Oberfläche des zu umschrumpfenden Teiles benetzen und mit ihm verkleben. Die Erweichungspunkte dieser Kleber sowie ihr Temperatur-Viskositätsverlauf sind so gewählt, daß bei den auftretenden Schrumpftemperaturen eine ausreichende Benetzung gewährleistet ist.

Nachteil dieser thermoplastischen Kleber ist, daß sie bei erhöhten Temperaturen infolge der stark abfallenden Viskosität nur noch eine geringe Scherfestigkeit zeigen. Das kann dazu führen, daß die Schrumpfartikel beim Schrumpfvorgang oder bei später auftretenden erhöhten Temperaturen verrutschen können. Insbesondere bei der Verwendung solcher Schrumpfartikel für Kabelverbindungen und Übergängen mit unterschiedlichem Durchmesser kann der Schrumpfartikel von größeren auf den kleineren Durchmesser abgleiten.

Aus der DE-A-3 441 743 ist ein mit Schmelzkleber beschichteter Schrumpfartikel bekannt, bei dem die Kleberschicht feuchtigkeitsvernetzbar ausgestaltet ist. Entsprechend der Menge der gepfropften Silanverbindungen können unterschiedlich große Vernetzungsgrade eingestellt werden. Auf diese Weise läßt sich zwar die Scherfestigkeit des Klebers erhöhen, gleichzeitig steigt jedoch auch die Viskosität an, so daß die Benetzung der zu umschrumpfenden Oberfläche sich verschlechtert.

Der vorliegenden Erfindung liegt die Aufgabe zugrunde, die Wärmestandfestigkeit des Klebers bei erhöhten Temperaturen entscheidend zu verbessern.

Diese Aufgabe wird dadurch gelöst, daß der Heißschmelzkleber aus 30 - 80 Gew.% einer Komponente A, 15 - 50 Gew.% einer Komponente B und 5 bis 25 Gew.% einer Komponente C besteht, wobei die Komponente A aus einem Heißschmelzkleber auf Basis Polyamid, Ethylen-Vinyl-Azetat, Polyisobutylen, Polyester oder Styrol-Butadien-Copolymer, die Komponente B aus Ethylen-Acrylsäure-Copolymer oder Terpolymer, einem Co- oder Terpolymer des Ethylens und der Methacrylsäure, der Maleinsäure oder des Maleinsäurenhydrids, α-Olefinacrylsäure-Terpolymer oder α-Olefin-Methacrylsäure-Terpolymer, die Komponente C aus Ethylen-Vinyl-Azetat-Copolymer, Ethylen-Acrylat-Copolymer oder Terpolymer, EPM oder EPDM, Styrol-Butadien-Copolymer, LLDPE, und/oder VLDPE besteht, und daß die Komponente B und/oder C über Organosilan-Verbindungen vernetzt sind.

Die einzelnen Komponenten des erfindungsgemäßen Heißschmelzklebers führen dazu, daß der Kleber bei den Schrumpftemperaturen eine gute Benetzung des zu umschrumpfenden Gegenstandes sowie hohe Scherfestigkeit aufweist. Während die gute Benetzung durch die unvernetzten Komponenten verursacht wird, liegen die Gründe für die erhöhte Scherfestigkeit in dem Vernetzungsgrad der übrigen Komponenten. Die Einhaltung definierter Vernetzungswerte ist von entscheidender Bedeutung für das Erreichen der gewünschten Eigenschaften. Ein zu hoher Vernetzungsgrad geht zu Lasten des Klebeverhaltens, d. h. der Schälwiderstand sinkt ab, ein zu geringer Vernetzungsgrad verringert die Scherfestigkeit bei höheren Temperaturen.

Nach einer besonders vorteilhaften Ausgestaltung der Erfindung werden als Komponente C Polymere verwendet, in die bereits bei der Polymerisation vernetzungsfähige Silangruppen eingebracht wurden. Derartige Produkte sind beispielsweise unter der Handelsbezeichnung Visico (Firma Neste) bzw. Silink Reactor-Copolymers (Union Carbide Corporation) auf dem Markt erhältlich.

Die Erfindung betrifft außerdem Verfahren zur Herstellung eines Schrumpfartikels.

Bei einer ersten Alternative werden zunächst die Komponenten A, B und C vermischt, sodann die für die Silanvernetzung erforderlichen Reagenzien wie Silan, Peroxid, Katalysator etc. in das Gemisch eingebracht, unmittelbar nach dem Einbringen der Reagenzien der Heißschmelzkleber auf die zu beschichtende Oberfläche aufgetragen, und anschließend wird der Heißschmelzkleber durch eindiffundierende Feuchtigkeit vernetzt.

Bei der zweiten Alternative werden die Komponenten B und/oder C zunächst mit Silanen gepfropft und die Komponenten A, B und C miteinander vermischt. Der Vernetzungskatalysator wird der Klebermischung erst vor der Verarbeitung, d.h. vor dem Einbringen in das Beschichtungsgerät zugesetzt. Die Vernetzung erfolgt anschließend durch Eindiffusion von Feuchtigkeit.

Nach einer besonderen Ausführungsform der Erfindung wird der Vernetzungskatalysator nach der Ausformung zum Endprodukt in die Kleberschicht eindiffundiert.

Das Aufbringen der Kleberschicht auf den Schrumpfartikel kann mittels eines Schmelzkleberauftraggerätes oder eines Extruders unter Verwendung entsprechender Auftragsdüsen erfolgen. Als besonders vorteilhaft hat es sich jedoch erwiesen, wenn der Schrumpfartikel mit der Kleberschicht durch Koextrusion hergestellt wird. Ausformung und auch Vernetzung können dann jeweils gemeinsam und in einem Arbeitsgang vorgenommen werden.

Die Erfindung ist anhand der in den nachfolgend beschriebenen Ausführungsbeispielen näher erläutert.

### Beispiel 1

Aus 50 Teilen Polyethylen, 40 Teilen Ethylen-Vinylazetat-Copolymer und 10 Teilen Ruß wird eine Mischung hergestellt und zu Granulat verarbeitet.

Das Granulat wird in einen Extruder eingegeben, gleichzeitig ca. 1,5 Gew.% eines Vernetzungshilfsmittel aus Vinylmetoxysilan, einem Peroxid und einem Katalysator zugemischt, und die Mischung zu einem Schlauch von ca. 36 mm Außendurchmesser und einer Wanddicke von 3,5 mm verarbeitet. Der Schlauch wird anschließend bei einer Temperatur von 95 °C in einer Wasserdampfatmosphäre ca. 24 Stunden vernetzt.

Nach der Vernetzung wird der Schlauch erwärmt, im erwärmten Zustand auf einen Außendurchmesser von ca. 120 mm aufgeweitet und abgekühlt.

40 Teile eines Heißschmelzklebers auf Polyamidbasis, 35 Teile eines Ethylen-Acrylsäure-Copolymers und 25 Teile eines Ethylen-Vinylazetat Copolymers, von denen ca. 50 % mit einem Silan gepfropft ist, werden gemischt und zu Granulat verarbeitet. Das Granulat wird gemeinsam mit einem Katalysator in einen Extruder eingegeben und die innere Oberfläche des Schlauches mit dem Kleber beschichtet.

Anschließend wird der beschichtete Schlauch zum Zwecke der Vernetzung der Kleberschicht in einer Wasserdampfatmosphäre bei erhöhter Temperatur gelagert.

### Beispiel 2

Das aus 50 Teilen Polyethylen, 40 Teilen Ethylen-Vinylazetat-Copolymer und 10 Teilen Ruß hergestellte Granulat wird wie oben beschrieben mit dem Vernetzungshilfsmittel in den Extruder A, das Klebergranulat aus 40 Teilen Heißschmelzkleber auf Polyamidbasis, 35 Teilen Ethylen-Acrylsäure-Copolymer und 25 Teilen eines Ethylen-Vinylazetat-Copolymers, von dem ca. 50 % mit einem Silan gepfropft wurden, in den Extruder B einer Koextrusionsanlage eingegeben.

Die beiden Mischungen wurden zu einem aus zwei konzentrischen miteinander verbundenen Schichten bestehenden Schlauch extrudiert, wobei die Kleberschicht an der inneren Oberfläche befindlich ist.

Das koextrudierte Gebilde wird in einer Wasserdampfatmosphäre ca. 24 Stunden bei 95 °C gelagert, wobei beide Schichten entsprechend ihrem Pfropfgrad vernetzt werden.

Anschließend wird der Schlauch auf ca. 120 °C erwärmt aufgeweitet und im aufgeweiteten Zustand abgekühlt.

Proben der nach den Beispielen 1 und 2 hergestellten Schrumpfschläuchen wurden auf ihre Eigenschaften untersucht.
1. Für die Schälfestigkeit wurden für beide Proben für Polyethylen 200 N/25 mm und für Kupfer 180 N/25 mm gemessen.
2. Jeweils eine Probe wurde auf einen Stufendorn mit einem Außendurchmesser von 100 und 40 mm und einem Übergang aufgesteckt und 30 min bei 150 °C in einem Ofen gelagert. Während Schrumpfschläuche mit herkömmlichen Heißschmelzklebern beim Schrumpfprozeß von dem großen Durchmesser über den Übergang bis auf den kleineren Durchmesser heruntergezogen wurden, blieben die Proben nach den Beispielen 1 und 2 auf dem großen Durchmesser haften.

## Patentansprüche

1. Schrumpfartikel, wie Schlauch, Kappe, Manschette oder Band, aus einem vernetzten Werkstoff auf der Basis Olefinpolymerisate oder Olefinmischpolymerisate, Elastomere oder thermoplastische Kautschuke, dessen dem zu umhüllenden Gegenstand zugekehrte Oberfläche mit einem bei Schrumpftemperatur erweichenden Heißschmelzkleber beschichtet ist, dadurch gekennzeichnet, daß der Heißschmelzkleber aus 30 - 80 Gew.% einer Komponente A, 15 - 50 Gew.% einer Komponente B und 5 bis 25 Gew.% einer Komponente C besteht, wobei die Komponente A aus einem Heißschmelzkleber auf Basis Polyamid, Ethylen-Vinyl-Azetat, Polyisobutylen, Polyester, oder Styrol-Butadien-Copolymer, die Komponente B aus Ethylen-Acrylsäure-Copolymer oder Terpolymer, einem Co- oder Terpolymer des Ethylens und der Methacrylsäure, der Maleinsäure oder des Maleinsäureanhydrids, α-Olefinacrylsäure-Terpolymer oder α-Olefin-Methacrylsäure-Terpolymer, die Komponente C aus Ethylen-Vinyl-Azetat-Copolymer, Ethylenacrylatcopolymer oder Terpolymer, EPM oder EPDM, Styrol-Butadien-Copolymer, LLDPE und/oder VLDPE besteht und daß die Komponente B und/oder C über Organo-Silan-Verbindungen vernetzt sind.

2. Schrumpfartikel nach Anspruch 1, dadurch gekennzeichnet, daß als Komponente C Polymere verwendet werden, in die bereits bei der Polymerisation vernetzungsfähige Silangruppen eingebracht wurden.

3. Verfahren zur Herstellung eines Schrumpfartikels nach Anspruch 1, dadurch gekennzeichnet, daß zunächst die Komponenten A, B und C vermischt werden, daß die für die Silanvernetzung erforderlichen Reagenzien wie Silan, Peroxid, Katalysator etc. in das Gemisch eingebracht, daß unmittelbar nach dem Einbringen der Reagenzien der Heißschmelzkleber auf die zu beschichtende Oberfläche aufgetragen, und daß der Heißschmelzkleber durch eindiffundierende Feuchtigkeit vernetzt wird.

4. Verfahren zur Herstellung eines Schrumpfartikels nach Anspruch 1, dadurch gekennzeichnet, daß die Komponenten B und/oder C zunächst mit Silanen gepfropft werden und die Komponenten A, B und C miteinander vermischt werden, der Vernetzungskatalysator zugegeben, und die Vernetzung durch eindiffundierende Feuchtigkeit erfolgt.

5. Verfahren nach Anspruch 4, dadurch gekennzeichnet, daß der Vernetzungskatalysator nach der Ausformung zum Endprodukt in die Kleberschicht eindiffundiert wird.

## Claims

1. Shrink article, such as a tube, hood, sleeve or tape, made from a crosslinked material based on olefin polymers or olefin copolymers, elastomers or thermoplastic rubbers, whose surface facing the article to be wrapped is coated with a hot-melt adhesive which softens at the shrink temperature, characterized in that the hot-melt adhesive comprises 30-80% by weight of a component A, 15-50% by weight of a component B and from 5 to 25% by weight of a component C, where component A comprises a hot-melt adhesive based on polyamide, ethylene-vinyl acetate, polyisobutylene, polyester or styrene-butadiene copolymer, component B comprises ethylene-acrylic acid copolymer or terpolymer, a copolymer or terpolymer of ethylene and of methacrylic acid, maleic acid or maleic anhydride, α-olefin-acrylic acid terpolymer or α-olefin-methacrylic acid terpolymer, component C comprises ethylene-vinyl-acetate copolymer, ethylene acrylate copolymer or terpolymer, EPM or EPDM, styrene-butadiene copolymer, LLDPE and/or VLDPE, and in that components B and/or C are crosslinked via organosilane compounds.

2. Shrink article according to Claim 1, characterized in that component C is a polymer into which silane groups which are capable of crosslinking have been introduced during the polymerization.

3. Process for the production of a shrink article according to Claim 1, characterized in that first components A, B and C are mixed, in that the reagents necessary for the silane crosslinking, such as silane, peroxide, catalyst etc., are introduced into the mixture, in that the hot-melt adhesive is applied to the surface to be coated immediately after introduction of the reagents, and in that the hot-melt adhesive is crosslinked by moisture diffusing in.

4. Process for the production of a shrink article according to Claim 1, characterized in that components B and/or C are first grafted with silanes, and components A, B and C are mixed with one another, the crosslinking catalyst is added, and the crosslinking is carried out by moisture diffusing in.

5. Process according to Claim 4, characterized in that the crosslinking catalyst is diffused into the adhesive layer after shaping to give the final product.

## Revendications

1. Article rétractable tel qu'un tuyau souple, une rallonge, une manchette, un ruban, en matière réticulée à base de polymère d'oléfine ou de mélange d'oléfines, d'élastomère ou de caoutchouc thermoplastique, dans lesquels la surface adjacente a l'objet à envelopper est recouverte d'une colle fondant à la chaleur se ramollisant à la température de retrait, **caractérisé en ce que** la colle est constituée de 30 à 80% en poids d'un composant A, 15 à 50% en poids d'un composant B et 5 à 25% en poids d'un composant C, dans lequel le composant A est constitué d'une colle fondant à la chaleur à base de polyamide, d'acétate d'éthyle-vinyle, de polyisobutène, de polyester ou de copolymère de butadiène ou de styrène, le composant B d'un copolymère ou d'un terpolymère d'acide acrylique et d'éthylène, d'un copolymère ou d'un terpolymère d'éthylène ou d'acide méthacrylique, d'acide maléique ou d'un hydrure d'acide maléique, d'un terpolymère d'acide acrylique-oléfine α ou d'un terpolymère d'acide méthacrylique-oléfine α, le composant C d'un copolymère d'acétate de vinyle-éthylène, d'un copolymère ou d'un terpolymère d'acrylate d'éthylène ou d'un terpolymère d'acrylate d'éthylène, EPM ou EPDM, copolymère de butadiene-styrol, LLDPE et/ou VLDPE **et en ce que** le composant B et/ou C sont réticulés sur des liaisons organo-silane.

2. Article rétractable selon la revendication 1, **caractérisé en ce que** sont employés comme composant C des polymères, dans lesquels déjà lors de la polymérisation des groupes silanes réticulables ont été introduits.

3. Procédé de fabrication d'un article rétractable selon la revendication 1, **caractérisé en ce que**, on mélange tout d'abord les composants A, B, C, on introduit dans le mélange les réactifs nécessaires pour la réticulation du silane tels que le silane, le peroxyde, le catalyseur, etc., en ce que immédiatement après l'introduction des réactifs on étend la colle fondant à la chaleur sur la surface à revêtir et en ce que la colle est réticulée par l'humidité diffusant à l'intérieur.

4. Procédé de fabrication d'un article rétracitable selon la revendication 1, **caractérisé en ce que** les composants B et C sont greffés tout d'abord avec des silanes et les composants A, B et C sont mélangés ensemble, le catalyseur de réticulation est ajouté et la réticulation se produit par diffusion à l'intérieur de l'humidité.

5. Procédé selon la revendication 4, **caractérisé en ce que** le catalyseur de réticulation après formation du produit final est diffusé à l'intérieur de la couche de colle.
